# FASCICULE DE BREVET EUROPEEN

(11) **EP 3 856 639 B1**
(45) Date de publication et mention de la délivrance du brevet: **17.05.2023**
(21) Numéro de dépôt: 19925800.5
(22) Date de dépôt: 27.09.2019
(51) Int. Cl.: B64D 29/00, B64D 33/02, B64D 29/08, F02C 7/04, F02C 7/00, F02C 7/045

(54) **NACELLE POUR AÉRONEF ET ENTRÉE D'AIR ASSOCIÉE**
FLUGZEUGGONDEL UND ZUGEHÖRIGER LUFTEINLASS
AIRCRAFT NACELLE AND ASSOCIATED AIR INLET

(30) Priorité: 28.09.2018 FR 1859000
(43) Date de publication de la demande: 04.08.2021
(73) Titulaire: Safran Nacelles, 76700 Gonfreville-l'Orcher (FR)
(72) Inventeur: BOILEAU, Patrick, 77550 MOISSY CRAMAYEL (FR)
(74) Mandataire: Germain Maureau
(86) Numéro de dépôt international: PCT/FR2019/052295
(87) Numéro de publication internationale: WO 2020/217000

(56) Documents cités:
- EP-A2- 2 628 919
- FR-A1- 3 044 053
- US-A1- 2014 294 581
- US-A1- 2015 226 231

## Description

La présente invention se rapporte à une nacelle pour aéronef et plus précisément à une entrée d'air d'une telle nacelle.

Un avion est propulsé par un ou plusieurs ensembles propulsifs comprenant un moteur logeant dans une nacelle tubulaire.

Une nacelle présente généralement une structure tubulaire d'axe longitudinal comprenant une entrée d'air en amont du moteur, une section médiane destinée à entourer une soufflante du turboréacteur, une section aval abritant des moyens d'inversion de poussée et destinée à entourer la chambre de combustion du turboréacteur, la nacelle étant généralement terminée par une tuyère d'éjection dont la sortie est située en aval du turboréacteur.

On entend ici par le terme « aval » la direction correspondant au sens du flux d'air froid pénétrant dans le turboréacteur. Le terme « amont » désigne la direction opposée.

L'entrée d'air comprend, d'une part, une lèvre d'entrée adaptée pour permettre la captation optimale vers le turboréacteur de l'air nécessaire à l'alimentation de la soufflante et des compresseurs internes du turboréacteur, et d'autre part, une structure aval sur laquelle est rapportée la lèvre et destinée à canaliser convenablement l'air vers des aubes de la soufflante. L'ensemble est rattaché en amont d'un carter de la soufflante appartenant à la section amont de la nacelle.

La soufflante comprend un aubage qui comporte une pluralité d'aubes. Le rôle de la section d'entrée d'air est de capter l'air destiné à alimenter le turboréacteur, tout en assurant un écoulement de l'air optimal jusqu'à un plan d'entrée de la soufflante. Il est notamment nécessaire de décélérer l'écoulement de l'air jusqu'au plan d'entrée de la soufflante. Pour ce faire, la section d'entrée d'air comporte une paroi intérieure de forme incurvée s'étendant longitudinalement jusqu'au carter de soufflante.

La nacelle comporte également typiquement un sommet destiné à recevoir un pylône d'attache permettant le fixer la nacelle et le turboréacteur à une aile de l'aéronef ou au niveau du fuselage. Chaque ensemble propulsif est ainsi rattaché à l'avion par un mât situé généralement sous une aile ou au niveau du fuselage.

Les nacelles modernes sont destinées à abriter un turboréacteur double flux apte à générer par l'intermédiaire des pales de la soufflante en rotation un flux d'air chaud (également appelé « flux primaire ») issu de la partie haute pression du turboréacteur, et un flux d'air froid (« flux secondaire ») qui circule à l'extérieur du turboréacteur à travers un passage annulaire, également appelé « veine ».

Les moteurs d'avion à très grand taux de dilution pour l'aviation civile peuvent être associés à une entrée d'air relativement courte.

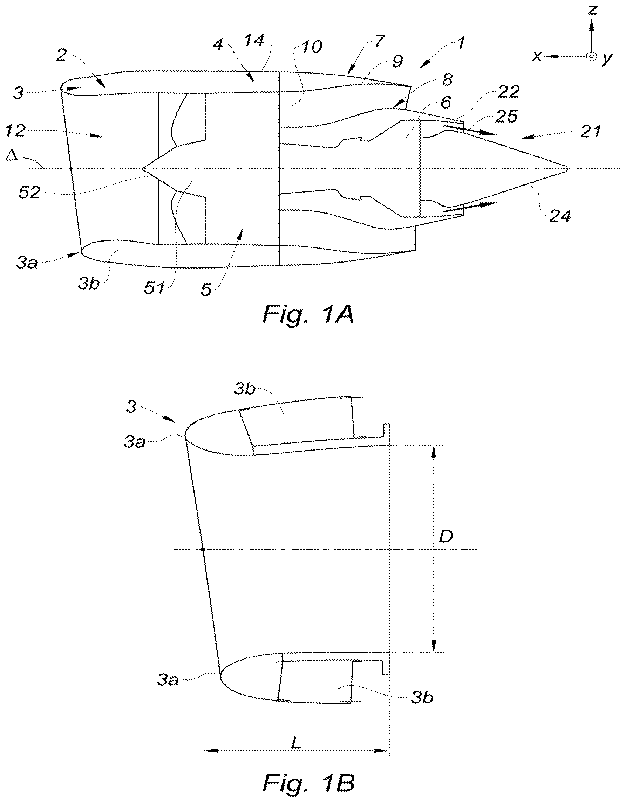

Des exemples d'entrée d'air courte sont typiquement, des entrées d'air dont le ratio L/D de leur longueur L prise longitudinalement sur leur diamètre intérieur D correspondant au diamètre de la soufflante (fan), est compris entre 0.5 et 0.25. Certaines entrées d'air connues présentent un ratio L/D entre 0.7 et 0.5 tandis que certaines entrées d'air récentes présentent un ratio L/D entre 0.35 et 0.30 (voir la figure 1B).

La veine créée dans cette entrée est alors courbée pour des besoins d'optimisation de l'alimentation moteur dans toutes les attitudes de l'aéronef. En effet, les performances du turboréacteur sont directement liées à la quantité et à la qualité de la captation d'air réalisée par l'entrée d'air.

La veine présente aussi un col et donc une évolution de section pour améliorer encore l'alimentation moteur.

Toutes ces caractéristiques géométriques font qu'il n'est pas possible avoir une géométrie cylindrique de la nacelle devant le moteur de longueur garantissant le démontage des aubes de la soufflante.

En effet, le remplacement d'une ou plusieurs aubes de la soufflante doit être effectuée sans autre démontage que des parties moteur (cône puis aube). Le démontage est tributaire d'une cinématique axiale équivalente à la longueur de la mortaise encastrant le pied de l'aube de la soufflante.

En extrémité distale d'aube, à savoir l'extrémité opposée à son pied, la surface de la veine en regard doit être cylindrique de manière à ne pas bloquer cette cinématique. Toutefois dans le cas d'une entrée d'air relativement courte la courbure de la veine est plus proche de la soufflante et peut rendre impossible le démontage des aubes.

La présente invention a pour objet de proposer une solution permettant l'utilisation d'une soufflante optimisée aérodynamiquement avec la nacelle dont les formes géométriques assurent leur fonction aérodynamique, tout en garantissant une maintenance simplifiée en cas de démontage des aubes de la soufflante.

Des exemples de l'art antérieur sont présentés dans les documents US2014294581 A1, FR3044053 A1, EP2628919 A2 et US2015226231 A1.

A cet effet, la présente invention concerne une entrée d'air pour nacelle destinée à équiper un ensemble propulsif d'aéronef du type comprenant une entrée d'air en amont d'un moteur délimitant une veine d'entrée d'air, une section médiane destinée à entourer une soufflante du moteur et une section aval destinée à entourer la chambre de combustion du moteur, l'entrée d'air étant remarquable en ce qu'elle comprend un mécanisme de démontage présentant un panneau mobile entre une position fermée affleurante dans laquelle il assure la continuité aérodynamique de l'entrée d'air dans la veine d'entrée d'air et une position ouverte de maintenance dans laquelle le panneau est en retrait radialement vers l'extérieur par rapport à sa position fermée affleurante de sorte à libérer un espace permettant le retrait d'une aube de soufflante au niveau de son extrémité distale.

Grâce à ces caractéristiques, il est possible de procéder à la dépose d'une aube de la soufflante de façon pratique, sans qu'un col formé par l'entrée d'air ne vienne obstruer la manoeuvre de maintenance. En effet, un déplacement du panneau mobile du mécanisme de démontage vers sa position ouverte de maintenance permet de libérer un espace longitudinalement en regard d'une extrémité distale de l'aube de la soufflante concernée, et ainsi d'augmenter l'espace nécessaire à la manoeuvre sans obstruction de l'entrée d'air.

Il est entendu par un panneau « mobile », que le panneau peut être mobile intégralement, en étant lié ou non à la structure de l'entrée d'air, ou qu'une partie au moins de ce panneau peut être mobile.

Selon l'invention, le panneau mobile est fixée à la nacelle par des moyens de fixations logés intégralement dans la nacelle, en particulier dans l'entrée d'air de la nacelle.

Une telle caractéristique permet d'améliorer la configuration de l'entrée d'air notamment en terme d'aérodynamisme que de facilité de maintenance.

Selon une autre caractéristique, dans la position ouverte de maintenance, le panneau mobile est logé dans l'entrée d'air de la nacelle afin de faciliter les opérations de maintenance.

Avantageusement, les moyens de fixation du panneau mobile à la nacelle sont configurés pour guider le panneau mobile suivant une course finie entre la position fermée affleurante et la position ouverte de maintenance, la course étant délimitée par des moyens de retenue tels que des butées. En d'autres termes, les moyens de fixation comprennent des moyens de guidages permettant de guider la course du panneau mobile entre ses deux positions extrêmes d'ouverture et de fermeture, le panneau mobile restant relié à la nacelle durant cette course entre les butées.

Selon une autre caractéristique technique, les moyens de fixation sont configurés pour garantir la fixation du panneau mobile à la nacelle entre la position fermée affleurante et la position ouverte de maintenance. En d'autres termes, le mécanisme de démontage est configuré pour que panneau mobile reste continûment fixé à l'entrée d'air de la nacelle quel que soit sa position. Cela permet notamment d'améliorer la sécurité du dispositif. Une telle caractéristique garantit en effet la rétention du panneau mobile même en cas de mauvais montage.

Selon une caractéristique avantageuse, le panneau mobile est relié à l'entrée d'air par une pluralité de moyens de fixation. Ceci participe encore à garantir la rétention du panneau mobile même en cas de mauvais montage.

Dans une configuration technique particulière, le panneau mobile est mobile suivant une translation radiale.

Selon une première alternative, le mécanisme de démontage présente une cavité formée dans une épaisseur de l'entrée d'air et fermée par le panneau mobile en position fermée affleurant, les moyens de fixations comprenant des tiges radiales mobiles configurées pour être ancrée au panneau mobile et fixées à l'entrée d'air, par l'intermédiaire d'une chape à deux positions.

Selon une deuxième alternative, le mécanisme de démontage présente une cavité formée dans une épaisseur de l'entrée d'air et fermée par le panneau mobile en position fermée affleurant, le panneau mobile étant formé d'au moins une paroi souple et déformable.

De préférence dans ce cas, ce panneau présente une forme complémentaire de la cavité et présente une structure creuse telle qu'une structure alvéolée.

Selon une caractéristique de la première alternative, la chape mobile peut être une fixation à colonnes à deux positions.

Selon une autre caractéristique de la première alternative, les deux positions des chapes plaçant le panneau mobile dans ses positions respectives d'ouverture en maintenance et de fermeture, peuvent être verrouillées par des moyens de verrouillages.

Selon un autre aspect, l'invention concerne aussi une nacelle pour ensemble propulsif d'aéronef remarquable en ce qu'elle comprend une entrée d'air comprenant tout ou partie des caractéristiques précitées.

D'autres caractéristiques et avantages de l'invention ressortiront à la lecture de la description qui suit, donnée uniquement à titre d'exemple, en référence aux figures annexées, qui illustrent :
- figure 1A, une coupe schématique partielle d'un mode de réalisation d'une nacelle ;
- figure 1B, une coupe schématique partielle d'une entrée d'air d'une nacelle ;
- figure 2, une vue partielle d'une aube de fan durant son retrait pour une opération de maintenance, selon l'art antérieur ;
- figure 3, une vue partielle d'une entré d'air munie d'un mécanisme de démontage selon un mode de réalisation ;
- figure 4, une vue en coupe transversale d'une nacelle selon ce mode de réalisation ;
- figures 5A et 5B, des vues de dessus d'une entrée d'air illustrant des mécanismes de démontage selon des modes de réalisations distincts ;
- figures 6A et 6B, des vues partielles d'une entrée d'air munie d'un mécanisme de démontage selon un mode de réalisation, respectivement en position fermée affleurante et ouverte de maintenance ;
- figures 7A et 7B, des vues en coupe d'un mécanisme de démontage selon un mode de réalisation, respectivement en position fermée affleurante et ouverte de maintenance ;
- figure 7C, un schéma d'un moyen de fixation d'un panneau mobile d'un mécanisme de démontage pouvant être mis en oeuvre dans la configuration des figures 7A et 7B ;
- figures 8A et 8B, des vues en coupe d'un mécanisme de démontage selon un autre mode de réalisation, qui ne fait pas partie de l'invention telle que revendiquée, respectivement en position fermée affleurante et ouverte de maintenance ;
- figures 9A et 9B, des vues en coupe d'un mécanisme de démontage selon un autre mode de réalisation, qui ne fait pas partie de l'invention telle que revendiquée, respectivement en position fermée affleurante et ouverte de maintenance ;
- figures 10A et 10B, des vues en coupe d'un mécanisme de démontage selon un autre mode de réalisation, respectivement en position fermée affleurante et ouverte de maintenance ;

Sur l'ensemble de ces figures, des références identiques ou analogues désignent des organes ou ensembles d'organes identiques ou analogues.

Comme représenté sur la figure 1A, une nacelle 1 selon l'invention présente une forme sensiblement tubulaire selon un axe longitudinal Δ (direction parallèle à X).

La nacelle 1 comprend une section amont 2 avec une lèvre d'entrée d'air 3, une section médiane 4 entourant une soufflante 5 d'un moteur 6 tel qu'un turboréacteur double flux et une section aval 7 abritant un système d'inversion de poussée (non visible), la nacelle servant à canaliser les flux d'air généré par le moteur 6.

L'entrée d'air 3 se divise en deux parties, à savoir d'une part, une lèvre 3a d'entrée adaptée pour permettre la captation optimale vers le turboréacteur de l'air nécessaire à l'alimentation de la soufflante et des compresseurs internes du turboréacteur, et d'autre part, une structure aval 3b sur laquelle est rapportée la lèvre 3a et destinée à canaliser convenablement l'air vers les aubes de la soufflante. L'ensemble est rattaché en amont d'un carter de la soufflante appartenant à la section médiane 4 de la nacelle 1.

La section aval 7 comprend quant à elle une structure interne 8 (encore appelée « inner fixed structure » ou « IFS ») entourant la partie amont du turboréacteur 6, une structure externe (encore appelée « outer fixed structure » ou « OFS ») 9 et un capot mobile comportant des moyens d'inversion de poussée. La structure interne ou IFS 8 ainsi que la structure externe ou OFS 9 sont fixes par rapport au capot mobile.

L'IFS 8 et l'OFS 9 délimite une veine 10 permettant le passage d'un flux d'air 12 pénétrant la nacelle 1 au niveau de la lèvre d'entrée d'air 3.

La nacelle 1 comporte un sommet 14 destiné à recevoir un pylône 16 d'attache permettant de fixer ladite nacelle 1 à une aile de l'aéronef. Pour ce faire, ledit sommet 14 comporte des moyens pour fixer ledit pylône 16.

La nacelle de turboréacteur est en particulier suspendue au pylône 16, par le biais d'une poutre 11 au niveau de ce sommet 14.

La nacelle 1 se termine par une tuyère d'éjection 21 comprenant un module externe 22 et un module interne 24. Les modules interne 24 et externe 22 définissent un canal d'écoulement de flux d'air primaire 25, dit chaud, sortant du turboréacteur 6.

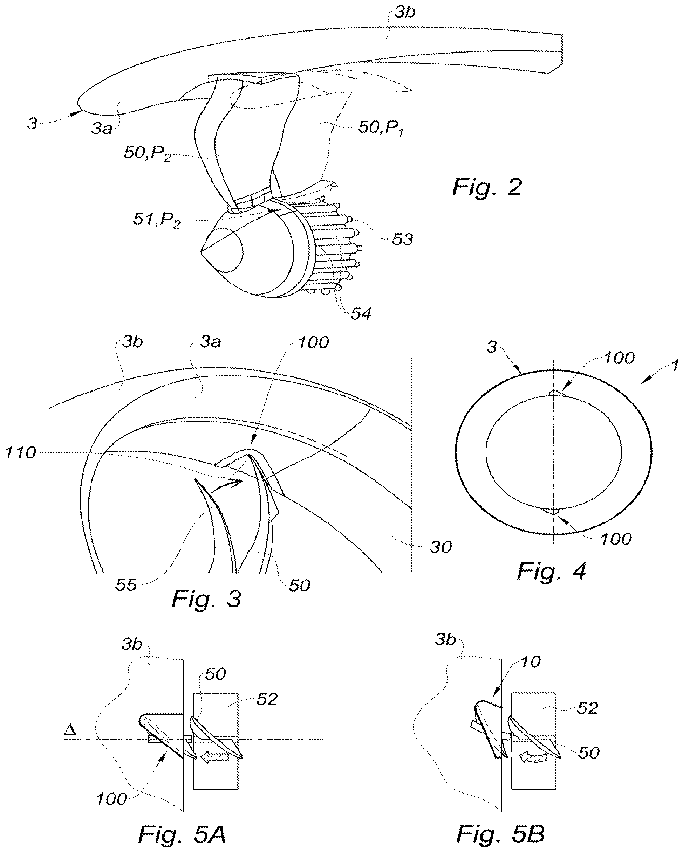

Comme représenté plus spécifiquement sur la figure 2 illustrant l'art antérieur, le démontage d'une aube 50 de la soufflante 5 est tributaire d'une cinématique axiale équivalente à la longueur de la mortaise encastrant le pied de l'aube de la soufflante. Sur une entrée d'air courte, les lignes peuvent affecter ce démontage.

Des exemples d'entrée d'air courte sont typiquement, des entrées d'air dont le ratio de leur longueur L prise longitudinalement sur leur diamètre intérieur D correspondant au diamètre de la veine où l'air circule, est compris entre 0.5 et 0.25 (voir la figure 1B).

Plus précisément, la soufflante 5 du turboréacteur comporte un disque rotatif 52 dont la périphérie comporte une pluralité d'alvéoles. Les aubes 50 de la soufflante comportent chacune une attache 53 située au niveau d'une première extrémité, aussi appelée pieds, cette atttache 53 étant logée dans l'une des alvéoles 54 du disque 52. L'attache d'une aube 50 classique est généralement rectiligne, mais il existe également des aubes 50 à attache curviligne présentant une courbure dans un plan tangent à la périphérie du disque 52.

Pour déposer une aube 50 de la soufflante 5 de manière classique, un cône 51 situé en amont du disque 52 de la soufflante 5 est préalablement démonté.

Ensuite, une cale disposée dans l'alvéole 54 du disque 52, entre l'attache 53 de l'aube 50 et le fond de l'alvéole 54, est retirée.

L'aube 50 est alors déplacée radialement d'une certaine hauteur permise par le retrait de la cale, puis l'aube 50 est dégagée de l'alvéole 54 en faisant glisser longitudinalement l'attache 53 dans l'alvéole 54 d'une position P1 à une position P2 (voir la figure 2). De cette manière, l'aube 50 est déposée en passant par la section d'entrée d'air 3 sans entrer en contact avec cette dernière.

Cependant, la tendance est actuellement à une augmentation du taux de dilution des turboréacteurs à double flux, également appelé BPR pour « By-Pass Ratio » en anglais. Le taux de dilution correspond au rapport entre le débit du flux secondaire et le débit du flux primaire de l'air dans le turboréacteur.

Pour augmenter le taux de dilution, le diamètre de la nacelle est augmenté, ce qui présente des inconvénients comme une augmentation de la masse et de la traînée de la nacelle. La conception de la nacelle est alors revue pour réduire l'impact de ces inconvénients. Dans ce but, la longueur de la section d'entrée d'air est réduite. On parle alors de section d'entrée d'air « courte ».

Malgré une longueur réduite, il est nécessaire que la section d'entrée d'air 3 conserve les mêmes capacités à fournir un écoulement de l'air optimal jusqu'au plan d'entrée de la soufflante. Pour cela, la paroi intérieure 30 de la section d'entrée d'air 3 pénètre plus loin sous le carter entourant la soufflante.

Dans cette configuration, la paroi intérieure 30 empêche la dépose d'une aube 50 de la soufflante. En effet, l'espace est insuffisant pour dégager complètement l'attache 53 de l'aube 50 de l'alvéole 54 du disque 52, l'aube 50 entrant en contact avec la paroi intérieure 30, notamment au niveau de son extrémité distale 55 opposée au pied formant attache 54, ceci avant de pouvoir être totalement retirée. Il est alors nécessaire de démonter l'entrée d'air 3 de la nacelle 1 afin que l'aube 50 puisse être dégagée longitudinalement.

Cette solution présente toutefois l'inconvénient de consommer énormément de temps en raison de la présence de nombreux dispositifs dans la section d'entrée d'air 3 de la nacelle, par exemple des systèmes de dégivrage

La figure 3 illustrent une vue partielle d'une entré d'air munie d'un mécanisme de démontage selon un mode de réalisation de l'invention, permettant de répondre aux inconvénients de l'art antérieur.

Dans ce mode de réalisation, l'entrée d'air 3 selon l'invetion comprend un mécanisme de démontage 100 muni d'un panneau mobile 110.

Ce panneau 110 est mobile entre :
- une position fermée affleurante dans laquelle il assure la continuité aérodynamique de l'entrée d'air 3 dans la veine d'entrée d'air, il s'agit d'une position en vol par exemple ; et
- une position ouverte de maintenance dans laquelle le panneau 110 est en retrait radialement vers l'extérieur par rapport à sa position fermée affleurante de sorte à libérer un espace 120 permettant le retrait d'une aube 50 de soufflante au niveau de son extrémité distale 55.

Le mécanisme de démontage 100 présente une cavité 140 formée dans une épaisseur de l'entrée d'air 3, c'est-à-dire qu'elle s'étend radialement dans la structure de la nacelle 1 délimitant la veine d'entrée d'air.

Cette cavité 140, en position fermée, est fermée par le panneau mobile 110 permettant au flux d'air circulant dans la veine de lécher la paroi intérieure 30 de la section d'entrée d'air 3 et le panneau mobile 110 qui lui est affleurant de façon continue et sans obstacle jusqu'à la soufflante 5.

Durant la maintenance, le panneau 110 est déplacé, en particulier exacmoté, de sorte à venir pénétrer dans la structure de l'entrée d'air 3 de la nacelle elle-même. Ceci permet d'augmenter un espace d'un volume suffisant pour manipuler une aube 5 de la soufflante située radialement au droit de cet espace. Cet espace est notamment formé par la cavité 130 qui est alors ouverte vers la veine de circulation du flux.

La figure 3 illustre une position ouverte de la cavité 140 dans laquelle le panneau mobile 110 est escamoté en position ouverte de maintenance. Le volume alors ouvert permet de déplacer l'aube 50 de la soufflante 5 (suivant la flèche illustrée sur cette figure 3) sans rencontrer d'obstacle en étant déplacée vers l'avant de la nacelle 1.

Pour des raisons structurelles et pratiques, un tel mécanisme de démontage 100 n'est pas prévu sur tout le pourtour de la nacelle 1.

La nacelle peut comporter seulement un mécanisme de démontage 100 voire plusieurs. En référence à la figure 4, et selon un mode de réalisation avantageux, l'entrée d'air 3 de la nacelle comporte deux mécanismes de démontage 100 disposés de façon diamétralement opposée par rapport à la nacelle l'un par rapport à l'autre, c'est-à-dire de façon symétrique par rapport à l'axe longitudinal de la nacelle.

De préférence encore, comme cela est illustré en détail sur la figure 4, ces deux mécanismes 100 sont positionnés suivant des positions angulaires respectivement supérieure à 12h et inférieure à 6h.

Le fait que ces mécanismes soient diamétralement opposés et à ces deux positions supérieure à 12h et inférieure à 6h permet de faciliter la maintenance en permettant de retirer plus facilement deux aubes 50 à la fois de façon concommitante et sans gêne entre eux.

Un tel mécanisme de démontage 100 peut être utilisé quelque soit le type d'attache 54 des aubes 50, qu'elle soit rectiligne (voir la figure 5A) ou curviligne (voir la figure 5B), c'est-à-dire présentant une courbure dans un plan tangent à la périphérie du disque 52. Les figures 5A et 5B illustrent des vues partielles d'un mécanisme de démontage situé en position angulaire supérieure 12h et vu de dessus lors d'un mouvement de retrait d'une aube 50.

Le panneau mobile 110 est fixée à la nacelle 1 par des moyens de fixations 130 logés intégralement dans la nacelle 1 (non visibles sur les figures 3 à 7) et notamment dans l'entrée d'air 3 de la nacelle 1.

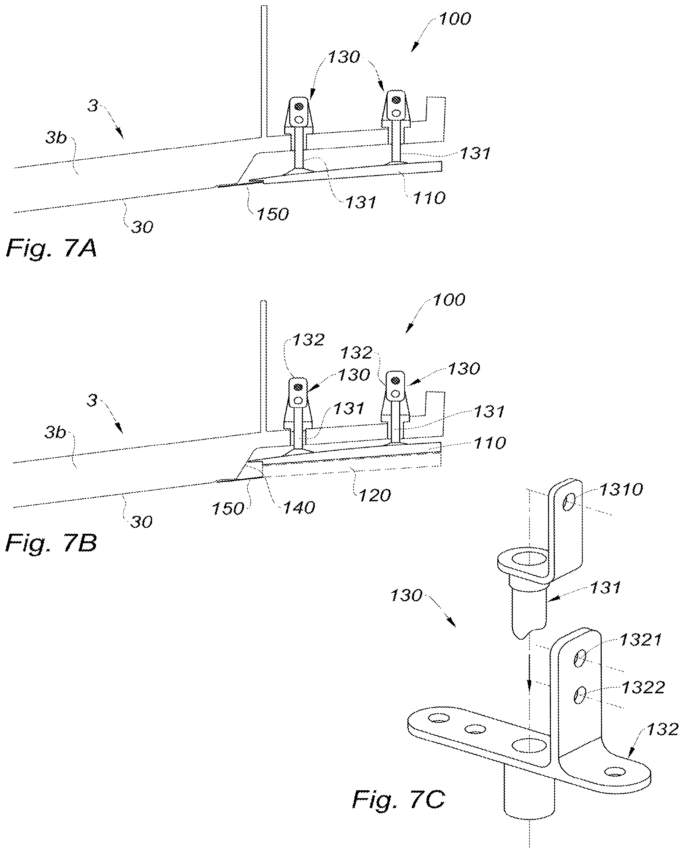

Les moyens de fixation 130 de ce mode de réalisation illustré sur les figures 3, 4, 5A, 6A et 6B sont détaillés plus précisément en référence aux figures 7A et 7B.

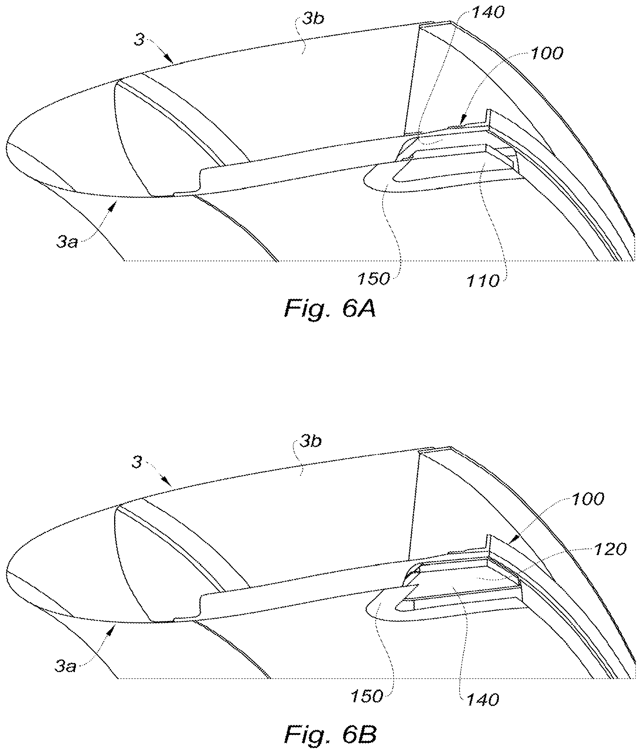

Les figures 6A et 6B illustrent des vues partielles d'une entrée d'air munie d'un mécanisme de démontage selon ce mode de réalisation, respectivement en position fermée et ouverte de maintenance. Pour améliorer la lisibilité de ces figures, les moyens de fixation 130 n'y sont pas représentés.

Les figures 7A et 7B illustrent des vues en coupe d'un mécanisme de démontage 100 selon ce mode de réalisation, respectivement en position fermée et ouverte de maintenance.

Dans la position fermée, le panneau 110 est afflurant avec la paroi intérieure 30 de la section d'entrée d'air 3 de sorte qu'il assure la continuité aérodynamique de l'entrée d'air (3) dans la veine d'entrée d'air.

Dans la position ouverte de maintenance, le panneau mobile 110 pénètre dans la cavité 140 et vient se loger à l'intérieur de la structure de l'entrée d'air 3 de la nacelle 1, l'épaisseur de sa structure étant localement réduite pour former cette cavité 140. Une telle cavité présente des dimensions relativement réduites de sorte que la tenue structurelle de l'entrée d'air n'est pas touchée.

La profondeur utile la cavité 140 varie suivant le besoin en volume pour assurer la cinématique de démontage. A titre d'exemple, on pourra choisir un démontage assuré par une translation radiale du panneau de 10mm pour une entrée d'air en forme sensiblement de tonneau d'épaisseur égale à 40mm, ce qui permet en outre de conserver de la matière au tonneau assurant la tenue structurelle tout en y logeant le système de fixation du panneau mobile 110. Dans le mode de réalisation des figures 7A et 7B, les moyens de fixations 130 comprenent des tiges 131 radiales ancrées au panneau mobile 110 du côté opposé à sa surface adaptée à être léchée par le flux d'air. Ces tiges sont également fixées à l'entrée d'air 3, notamment par l'intermédiaire d'une chape 132 mobile à deux positions.

Les tiges 131 traversent la paroi intérieure 30 de la section d'entrée d'air 3 et sont guidées par elles en translation, radialement par rapport à l'axe longitudinale de la nacelle.

Le déplacement des chapes 132 d'une première à une deuxième position permet de déplacer le panneau mobile 110 de sa position de fermeture à sa position d'ouverture. La translation des tiges de façon radiale entraine le coulissement du panneau mobile 110 suivant une translation radiale. Lors de ce mouvement, le panneau mobile 1 pénètre dans la cavité 140, vers un fond de celle-ci et libère un espace 120 utilisé pour la maintenance des aubes 50 libérant tout obstacle susceptible d'en gêner la manipulation.

Ces moyens de fixation du panneau mobile 110 à la nacelle 1 sont configurés pour guider le panneau mobile 110 suivant une course finie entre la position fermée affleurante et la position ouverte de maintenance. Dans ce mode de réalisation, ce sont les deux positions des chapes 132 mobiles qui sont bornées et délimitent cette course.

Les chapes 132 étant rigidement fixées à la paroi intérieure 30 de la section d'entrée d'air 3 d'une part et le panneau mobile étant rigidement fixés aux tiges 131 d'autres part, en plus du fait que les chapes sont mobiles, il en résulte que la fixation du panneau mobile 110 à la nacelle 1 entre la position fermée affleurante et la position ouverte de maintenance est garantie quel que soit la position du panneau mobile 110. Une telle fixation peut être assurée par une fixation à colonnes à deux positions, telle qu'illustrée par exemple figure 7C.

Les moyens de fixations 130 comprennent des moyens de retenue délimitant la course au niveau de ces deux positions extrême, à savoir les position fermée et ouverte) lesquels forment des butées (non illustré).

De préférences, les deux positions des chapes 132 plaçant le panneau mobile 110 dans ses positions respectives d'ouverture en maintenance et de fermeture, peuvent être verrouillées par des moyens de verrouillages. Ces moyens de verrouillage peuvent par exemple comprendre un pion (non illustré) qui vient s'insérer dans un orifice 1310 d'une partie mobile 131 et dans un orifice 1321 ou 1322 d'une partie fixe de la chape 132 par rapport à la paroi intérieure 30 de la section d'entrée d'air 3, lorsque ces orifices sont alignés. Une fois le pion inséré dans ces orifices, la position fermée ou ouverte est alors verrouillée.

L'entrée d'air 3 comprend un seuil 150 à l'interface entre la paroi du panneau mobile 110 léchée par le flux d'air et la paroi intérieure 30 de la section d'entrée d'air 3 qui lui est affleurant.

Un tel seuil 150 participe principalement à la rétention du panneau mobile 110 en position fermée en assurant son maintien et en formant une butée, et participe également à réduire les pertes de charges éventuellement créé entre ces deux pièces lors de son utilisation.

Cela permet d'éviter, en cas de mauvais montage, le risque d'ingestion de pièce dans le moteur au contraire d'une trappe articulée qui, si elle venait à s'ouvrir, sera arrachée.

Un tel mode de réalisation est particulièrement avantageux en ce qu'il permet de rentrer dans la structure de l'entrée d'air 3 en position ouverte. Il n'est ni articulé par une charnière qui pourrait présenter contraintes en fonctionnement, ou ni attaché fixement ce qui nécessiterait la dépose préalable de la pièce de façon désolidarisée de l'entrée d'air.

Dans ce mode de réalisation, le panneau mobile est maintenue à la structure de l'entrée d'air 3 quel que soit sa position.

Un tel panneau mobile 110 est de préférence dimensionné au plus juste pour le volume de démontage de l'aube, de manière à impacter le moins possible la surface acoustique de l'entrée d'air, pouvant être escamoté (mise en retrait) pour ledit démontage. Il est imperdable du fait d'un double moyen de rétention, un seuil aérodynamique 150 empêchant la protrusion du panneau dans la veine et des moyens de fixation 130 formant système de maintien traversant la structure de l'entrée d'air 3 en forme sensiblement de tonneau, ce qui assure le maintien en position et en sécurité dudit panneau.

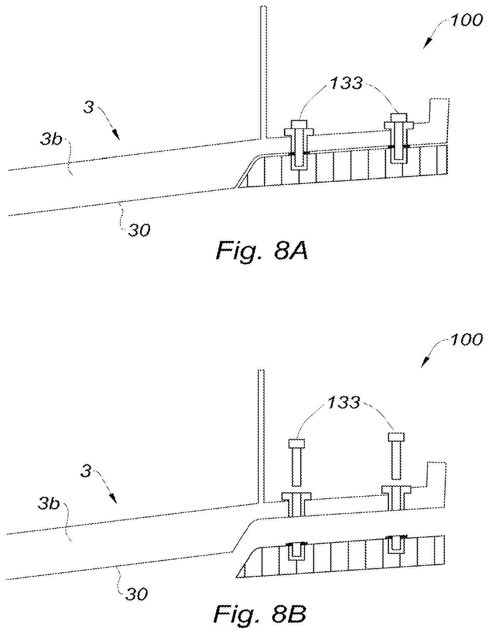

Les figures 8A et 8B illustrent des vues en coupe d'un mécanisme de démontage selon un autre mode de réalisation, respectivement en position fermée affleurante et ouverte de maintenance.

Ce mode de réalisation diffère essentiellement de celui illustré sur les figures 7A et 7B en ce que le panneau mobile 110 est ici configuré pour présenter un volume complémentaire de celui délimité par la cavité 140 correspondant à l'espace 120.

Les moyens de fixations 130 sont en outre amovibles, comprenant notamment des ensembles de vis 133 permettant la fixation du panneau mobile 110 à la paroi intérieure 30 de la section d'entrée d'air 3.

Ces vis 133 présentent une tête du côté de la paroi intérieure 30 opposé à la veine d'entrée d'air formant butée de rétention, traverse la paroi intérieure 30 et présente un pieds d'ancrage venant s'ancrer dans des inserts situés dans le panneau mobile 110. Les inserts comprennent un taraudage prévu pour recevoir le filetage de la vis. La paroi intérieure 30 de la section d'entrée d'air 3 formant localement le fond de la cavité 140 est donc prise en tenaille entre les têtes de vis 133 d'une part et le panneau mobile 110 d'autre part.

Dans une telle configuration, le panneau mobile l'opératoire doit effectuer une dépose du panneau mobile avant la dépose des aubes 50.

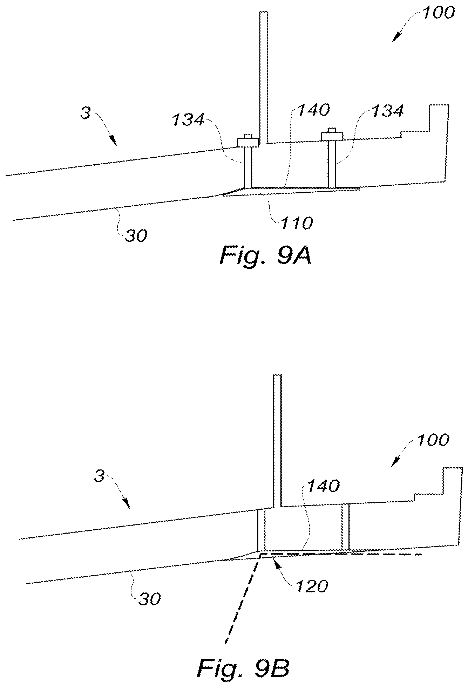

Les figures 9A et 9B illustrent des vues en coupe d'un mécanisme de démontage 100 selon un autre mode de réalisation, respectivement en position fermée affleurante et ouverte de maintenance.

Ce mode de réalisation diffère essentiellement du mode de réalisation précédent illustré sur les figures 8A et 8B en ce que la cavité 140 est plus réduite en ce qui concerne son volume, celui-ci dépendant des dimensions de l'entrée d'air de la nacelle et de la configuration de la soufflante 5.

Par ailleurs, le panneau mobile 110 est formé d'un carénage fixé par des moyens de fixations 130 comprenant des tirants traversants 134 fixés à la paroi intérieure 30 de la section d'entrée d'air 3 et solidaires dudit carénage.

Une ligne en pointillés sur la figure 9B schématise le chemin emprunté par une extrémité distale d'une aube 50 de soufflante 5 dirant son retrait.

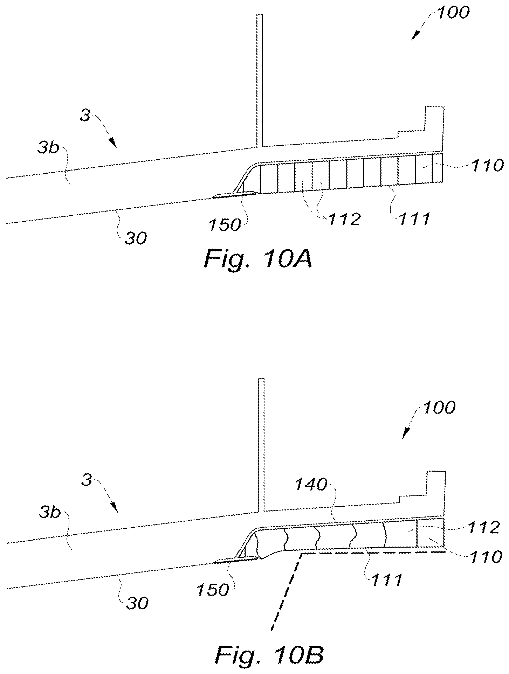

Les figures 10A et 10B illustrent des vues en coupe d'un mécanisme de démontage selon un autre mode de réalisation, respectivement en position fermée affleurante et ouverte de maintenance.

Ce mode de réalisation diffère essentiellement des précédents en ce que le mécanisme de démontage 100 présente une cavité formée dans l'épaisseur de l'entrée d'air 3 et fermée par le panneau mobile 110 en position fermée affleurant, le panneau mobile 110 étant formé d'au moins une paroi souple et déformable.

Dans cette configuration, le panneau mobile 110 présente un volume complémentaire de celui délimité par la cavité 140. Une déformation du panneau mobile 110 permet alors de libérer un espace 120.

Ce panneau mobile 110 est ici en matériau élastomère, encastré et collé à l'intérieur de la cavité 140.

Afin de garantir une déformation suffisante durant la maintenance et une rigidité et tenue structurelle approprié aux efforts subis localement par le panneau mobile 110, ledit panneau mobile 110 présente une structure creuse, de préférence alvéolée c'est-à-dire munie d'alvéoles 112. Un traitement acoustique du panneau mobile peut être envisagé.

La déformation d'au moins une paroi inférieure du panneau mobile léchée par le flux d'air en position de fermeture, est alors configurée pour être déformée vers l'intérieur du panneau mobile 110, c'est-à-dire radialement vers l'extérieur par rapport à sa position affleurante avec la paroi intérieure 30 de la section d'entrée d'air 3 en position de fermeture de sorte à libérer un espace 120 permettant le retrait d'une aube 50 de soufflante. Cette déformation peut être effectuée par exemple au moyen d'un outillage par un opérateur.

Dans ce mécanisme, c'est donc une partie du panneau mobile qui est destiné à être mobile entre les positions ouverte et fermées, le panneau présentant une base encastrée et collée dans la cavité 140 dont les déformations sont négligeables.

Un tel mécanisme de démontage 100 présente l'avantage ne de pas nécessiter d'être préalablement démonté par un opérateur, comme c'est le cas pour le mode de réalisation illustré sur les figures 8A et 8B.

Une ligne en pointillés sur la figure 10B schématise le chemin emprunté par une extrémité distale d'une aube 50 de soufflante 5 dirant son retrait.

Dans une configuration alternative ou complémentaire, il peut être envisagé que le panneau 110 est pressurisé en fonctionnement et dégonglé lors de la maintenance pour en réduire son volume. Un tel mode de réalisation permet d'éviter l'utilisation d'un outillage.

De préférence dans ce cas, le panneau mobile 110 présente une structure creuse, par exemple alvéolée, et présente en outre des évents d'équilibrage de la pression.

Ces évents d'équilibrage peuvent comporter par exemple au moins un perçage par alvéole soit dans les cloisons séparant les alvéoles, soit a l'extérieur c'est à dire dans une paroi entre la partie creuse et l'etérieur . En tout état de cause, une telle configuration nécessite au moins un perçage coté veine pour équilibrer les cavités, c'est-à-dire au moins un perçage de la paroi inférieure du panneau mobile 110 destinée à être léchée par le flux d'air en position de fermeture. Une configuration avantageuse dans ce cas est une combinaison des deux possibilités (perçage(s) interieur(s) entre cloisons et persçage(s) extérieur(s)) en minimisant l'impact de la traînée des perçages et optimisant le besoin de drainage des alvéoles ainsi ouvertes vers l'extérieur.

Quelque soit la configuration du panneau mobile 110, l'entrée d'air 3 peut présenter un seuil 150 à l'interface entre la paroi du panneau mobile 110 léchée par le flux d'air et la paroi intérieure 30 de la section d'entrée d'air 3 qui lui est affleurant, ceci de façon similaire au seuil aérodynamique décrit en référence aux figures 7A et 7B (voir par exemple les figures 10A et 10B).

## Revendications

1. Entrée d'air (3) pour nacelle (1) destinée à équiper un ensemble propulsif d'aéronef du type comprenant une entrée d'air (3) en amont d'un moteur (6) délimitant une veine d'entrée d'air, une section médiane (4) destinée à entourer une soufflante (5) du moteur (6) et une section aval (7) destinée à entourer la chambre de combustion du moteur,
l'entrée d'air (3) comprenant un mécanisme de démontage (100) présentant un panneau mobile (110) entre une position fermée affleurante dans laquelle il assure la continuité aérodynamique de l'entrée d'air (3) dans la veine d'entrée d'air et une position ouverte de maintenance dans laquelle le panneau mobile (110) est en retrait radialement vers l'extérieur par rapport à sa position fermée affleurante de sorte à libérer un espace (120) permettant le retrait d'une aube (50) de soufflante au niveau de son extrémité distale (55),
le panneau mobile (110) étant configuré pour être fixé à la nacelle (1) par des moyens de fixations (130) configurés pour être logés intégralement dans la nacelle (1), par exemple dans l'entrée d'air (3) de la nacelle (1),
le mécanisme de démontage (100) présentant une cavité (140) formée dans une épaisseur de l'entrée d'air (3) et fermée par le panneau mobile en position fermée affleurant,
**caractérisée en ce que** les moyens de fixations (130) comprenant des tiges radiales mobiles configurées pour être ancrées au panneau mobile (110) et fixées à l'entrée d'air (3) par l'intermédiaire d'une chape (132) à deux positions.

2. Entrée d'air (3) selon la revendication 1, **caractérisée en ce que** dans la position ouverte de maintenance, le panneau mobile (110) est logé dans l'entrée d'air (3) de la nacelle (1).

3. Entrée d'air (3) selon la revendication 1 ou 2, **caractérisée en ce que** les moyens de fixation du panneau mobile (10) à la nacelle (1) sont configurés pour guider le panneau mobile (110) suivant une course finie entre la position fermée affleurante et la position ouverte de maintenance, la course étant délimitée par des moyens de retenue tels que des butées.

4. Entrée d'air (3) selon la revendication 1 à 3, **caractérisée en ce que** les moyens de fixation (130) sont configurés pour garantir la fixation du panneau mobile (110) à la nacelle (1) entre la position fermée affleurante et la position ouverte de maintenance.

5. Entrée d'air (3) selon l'une quelconque des revendications précédentes, **caractérisée en ce que** le panneau mobile (110) est mobile suivant une translation radiale.

6. Entrée d'air (3) selon l'une des revendication précédentes, **caractérisée en ce que** la chape mobile (132) est une fixation à colonnes à deux positions.

7. Entrée d'air (3) selon l'une des revendication précédentes, **caractérisée en ce que** les deux positions des chapes (132) plaçant le panneau mobile (110) dans ses positions respectives d'ouverture en maintenance et de fermeture, sont verrouillées par des moyens de verrouillages.

8. Entrée d'air (3) pour nacelle (1) destinée à équiper un ensemble propulsif d'aéronef du type comprenant une entrée d'air (3) en amont d'un moteur (6) délimitant une veine d'entrée d'air, une section médiane (4) destinée à entourer une soufflante (5) du moteur (6) et une section aval (7) destinée à entourer la chambre de combustion du moteur,
l'entrée d'air (3) comprenant un mécanisme de démontage (100) présentant un panneau mobile (110) entre une position fermée affleurante dans laquelle il assure la continuité aérodynamique de l'entrée d'air (3) dans la veine d'entrée d'air et une position ouverte de maintenance dans laquelle le panneau (110) est en retrait radialement vers l'extérieur par rapport à sa position fermée affleurante de sorte à libérer un espace (120) permettant le retrait d'une aube (50) de soufflante au niveau de son extrémité distale (55),
le panneau mobile (110) étant configuré pour être fixé à la nacelle (1) par des moyens de fixations (130) configurés pour être logés intégralement dans la nacelle (1), par exemple dans l'entrée d'air (3) de la nacelle (1),
le mécanisme de démontage (100) présentant une cavité (140) formée dans une épaisseur de l'entrée d'air (3) et fermée par le panneau mobile (110) en position fermée affleurant,
**caractérisé en ce que** le panneau mobile (110) étant formé d'au moins une paroi souple et déformable.

9. Entrée d'air (3) selon la revendication 8, **caractérisée en ce que** dans la position ouverte de maintenance, le panneau mobile (110) est logé dans l'entrée d'air (3) de la nacelle (1).

10. Entrée d'air (3) selon la revendication 8 ou 9, **caractérisée en ce que** les moyens de fixation du panneau mobile (10) à la nacelle (1) sont configurés pour guider le panneau mobile (110) suivant une course finie entre la position fermée affleurante et la position ouverte de maintenance, la course étant délimitée par des moyens de retenue tels que des butées.

11. Entrée d'air (3) selon la revendication 8 à 10, **caractérisée en ce que** les moyens de fixation (130) sont configurés pour garantir la fixation du panneau mobile (110) à la nacelle (1) entre la position fermée affleurante et la position ouverte de maintenance.

12. Entrée d'air (3) selon l'une quelconque des revendications 8 à 11, **caractérisée en ce que** le panneau mobile (110) est mobile suivant une translation radiale.

13. Nacelle (1) pour ensemble propulsif d'aéronef **caractérisée en ce qu'**elle comprend une entrée d'air (3) selon l'une quelconque des revendications précédentes.

## Patentansprüche

1. Lufteinlass (3) für eine Gondel (1), die bestimmt ist, um eine Luftfahrzeugantriebsanordnung vom Typ auszurüsten, der einen Lufteinlass (3) stromaufwärtig von einem Motor (6) umfasst, der einen Lufteinlassstrom begrenzt, einen mittleren Abschnitt (4), der bestimmt ist, um ein Gebläse (5) des Motors (6) zu umgeben, und einen stromabwärtigen Abschnitt (7), der bestimmt ist, um die Brennkammer des Motors zu umgeben,
wobei der Lufteinlass (3) einen Demontagemechanismus (100) umfasst, der ein Paneel (110) aufweist, das beweglich ist zwischen einer geschlossenen Anliegeposition, in der es die aerodynamische Kontinuität des Lufteinlasses (3) im Lufteinlassstrom gewährleistet, und einer offenen Wartungsposition, in der das bewegliche Paneel (110) radial nach außen in Bezug auf seine geschlossene Anliegeposition zurückgezogen ist, um einen Raum (120) freizugeben, der das Zurückziehen einer Gebläseschaufel (50) an ihr distales Ende (55) ermöglicht,
wobei das bewegliche Paneel (110) konfiguriert ist, um an der Gondel (1) befestigt zu werden durch Befestigungsmittel (130), die konfiguriert sind, um vollständig in der Gondel (1) untergebracht zu werden, beispielsweise im Lufteinlass (3) der Gondel (1),
wobei der Demontagemechanismus (100) einen Hohlraum (140) aufweist, der in einer Dicke des Lufteinlasses (3) ausgebildet ist, und vom beweglichen Paneel in der geschlossenen Anliegeposition geschlossen wird,
**dadurch gekennzeichnet, dass** die Befestigungsmittel (130) bewegliche Radialstäbe umfassen, die konfiguriert sind, um am beweglichen Paneel (110) verankert zu werden, und am Lufteinlass (3) mittels einem Gabelkopf (132) an zwei Positionen befestigt sind.

2. Lufteinlass (3) nach Anspruch 1, **dadurch gekennzeichnet, dass** in der offenen Wartungsposition das bewegliche Paneel (110) im Lufteinlass (3) der Gondel (1) untergebracht ist.

3. Lufteinlass (3) nach Anspruch 1 oder 2, **dadurch gekennzeichnet, dass** die Mittel zur Befestigung des beweglichen Paneels (10) an der Gondel (1) konfiguriert sind, um das bewegliche Paneel (110), einem endlichen Weg folgend, zwischen der geschlossenen Anliegeposition und der offenen Wartungsposition zu führen, wobei der Weg durch Rückhaltemittel wie Anschläge begrenzt ist.

4. Lufteinlass (3) nach Anspruch 1 bis 3, **dadurch gekennzeichnet, dass** die Befestigungsmittel (130) konfiguriert sind, um die Befestigung des beweglichen Paneels (110) an der Gondel (1) zu gewährleisten zwischen der geschlossenen Anliegeposition und der offenen Wartungsposition.

5. Lufteinlass (3) nach einem der vorhergehenden Ansprüche, **dadurch gekennzeichnet, dass** das bewegliche Paneel (110) einer radialen Translation folgend beweglich ist.

6. Lufteinlass (3) nach einem der vorhergehenden Ansprüche, **dadurch gekennzeichnet, dass** der bewegliche Gabelkopf (132) eine Befestigung mit einer Reihe von zwei Positionen ist.

7. Lufteinlass (3) nach einem der vorhergehenden Ansprüche, **dadurch gekennzeichnet, dass** die beiden Positionen der Gabelköpfe (132), die das bewegliche Paneel (110) in seine jeweilige Position der Öffnung zur Wartung und der Schließung bringen, durch Verriegelungsmittel verriegelt sind.

8. Lufteinlass (3) für eine Gondel (1), die bestimmt ist, um eine Luftfahrzeugantriebsanordnung vom Typ auszurüsten, der einen Lufteinlass (3) stromaufwärtig von einem Motor (6) umfasst, der einen Lufteinlassstrom begrenzt, einen mittleren Abschnitt (4), der bestimmt ist, um ein Gebläse (5) des Motors (6) zu umgeben, und einen stromabwärtigen Abschnitt (7), der bestimmt ist, um die Brennkammer des Motors zu umgeben,
wobei der Lufteinlass (3) einen Demontagemechanismus (100) umfasst, der ein Paneel (110) aufweist, das beweglich ist zwischen einer geschlossenen Anliegeposition, in der es die aerodynamische Kontinuität des Lufteinlasses (3) im Lufteinlassstrom gewährleistet, und einer offenen Wartungsposition, in der das Paneel (110) radial nach außen in Bezug auf seine geschlossene Anliegeposition zurückgezogen ist, um einen Raum (120) freizugeben, der das Zurückziehen einer Gebläseschaufel (50) an ihr distales Ende (55) ermöglicht,
wobei das bewegliche Paneel (110) konfiguriert ist, um an der Gondel (1) befestigt zu werden durch Befestigungsmittel (130), die konfiguriert sind, um vollständig in der Gondel (1) untergebracht zu werden, beispielsweise im Lufteinlass (3) der Gondel (1),
wobei der Demontagemechanismus (100) einen Hohlraum (140) aufweist, der in einer Dicke des Lufteinlasses (3) ausgebildet ist, und vom beweglichen Paneel (110) in der geschlossenen Anliegeposition geschlossen wird,
**dadurch gekennzeichnet, dass** das bewegliche Paneel (110) von mindestens einer flexiblen und verformbaren Wand gebildet ist.

9. Lufteinlass (3) nach Anspruch 8, **dadurch gekennzeichnet, dass** in der offenen Wartungsposition das bewegliche Paneel (110) im Lufteinlass (3) der Gondel (1) untergebracht ist.

10. Lufteinlass (3) nach Anspruch 8 oder 9, **dadurch gekennzeichnet, dass** die Mittel zur Befestigung des beweglichen Paneels (10) an der Gondel (1) konfiguriert sind, um das bewegliche Paneel (110), einem endlichen Weg folgend, zwischen der geschlossenen Anliegeposition und der offenen Wartungsposition zu führen, wobei der Weg durch Rückhaltemittel wie Anschläge begrenzt ist.

11. Lufteinlass (3) nach Anspruch 8 bis 10, **dadurch gekennzeichnet, dass** die Befestigungsmittel (130) konfiguriert sind, um die Befestigung des beweglichen Paneels (110) an der Gondel (1) zu gewährleisten zwischen der geschlossenen Anliegeposition und der offenen Wartungsposition.

12. Lufteinlass (3) nach einem der Ansprüche 8 bis 11, **dadurch gekennzeichnet, dass** das bewegliche Paneel (110) einer radialen Translation folgend beweglich ist.

13. Gondel (1) für eine Luftfahrzeugantriebsanordnung, **dadurch gekennzeichnet, dass** sie einen Lufteinlass (3) nach einem der vorhergehenden Ansprüche umfasst.

## Claims

1. An air intake (3) for nacelle (1) intended to equip an aircraft propulsion unit of the type comprising an air intake (3) upstream of an engine (6) delimiting an air intake flow path, a median section (4) intended to surround a fan (5) of the engine (6) and a downstream section (7) intended to surround the combustion chamber of the engine,
the air intake (3) comprising a disassembly mechanism (100) having a movable panel (110) between a flush closed position in which it ensures the aerodynamic continuity of the air intake (3) in the air intake flow path and an open for maintenance position in which the movable panel (110) is recessed radially outward from its flush closed position so as to free up a space (120) allowing the removal of a fan blade (50) at its distal end (55),
the movable panel (110) being configured to be fixed to the nacelle (1) by fixing means (130) configured to be housed integrally in the nacelle (1), for example in the air intake (3) of the nacelle (1),
the disassembly mechanism (100) having a cavity (140) formed in a thickness of the air intake (3) and closed by the movable panel in the flush closed position,
**characterized in that** the fixing means (130) comprising movable radial rods configured to be anchored to the movable panel (110) and fixed to the air intake (3) by means of a two-position yoke (132).

2. The air intake (3) according to claim 1, **characterized in that** in the open for maintenance position, the movable panel (110) is housed in the air intake (3) of the nacelle (1).

3. The air intake (3) according to claim 1 or 2, **characterized in that** the means for fixing the movable panel (10) to the nacelle (1) are configured to guide the movable panel (110) along a finite stroke between the flush closed position and the open for maintenance position, the stroke being delimited by retaining means such as stops.

4. The air intake (3) according to claim 1 to 3, **characterized in that** the fixing means (130) are configured to ensure the fixing of the movable panel (110) to the nacelle (1) between the flush closed position and the open for maintenance position.

5. The air intake (3) according to any one of the preceding claims, **characterized in that** the movable panel (110) is movable in a radial translation.

6. The air intake (3) according to any of the preceding claims, **characterized in that** the movable yoke (132) is a two-position column fixing.

7. The air intake (3) according to any of the preceding claims, **characterized in that** the two positions of the yokes (132) placing the movable panel (110) in its respective open for maintenance and closed positions, are locked by locking means.

8. An air intake (3) for nacelle (1) intended to equip an aircraft propulsion unit of the type comprising an air intake (3) upstream of an engine (6) delimiting an air intake flow path, a median section (4) intended to surround a fan (5) of the engine (6) and a downstream section (7) intended to surround the combustion chamber of the engine,
the air intake (3) comprising a disassembly mechanism (100) having a movable panel (110) between a flush closed position in which it ensures the aerodynamic continuity of the air intake (3) in the air intake flow path and an open for maintenance position in which the panel (110) is recessed radially outward from its flush closed position so as to free up a space (120) allowing the removal of a fan blade (50) at its distal end (55),
the movable panel (110) being configured to be fixed to the nacelle (1) by fixing means (130) configured to be housed integrally in the nacelle (1), for example in the air intake (3) of the nacelle (1),
the disassembly mechanism (100) having a cavity (140) formed in a thickness of the air intake (3) and closed by the movable panel (110) in the flush closed position,
**characterized in that** the movable panel (110) being formed of at least one flexible and deformable wall.

9. The air intake (3) according to claim 8, **characterized in that** in the open for maintenance position, the movable panel (110) is housed in the air intake (3) of the nacelle (1).

10. The air intake (3) according to claim 8 or 9, **characterized in that** the means for fixing the movable panel (10) to the nacelle (1) are configured to guide the movable panel (110) along a finite stroke between the flush closed position and the open for maintenance position, the stroke being delimited by retaining means such as stops.

11. The air intake (3) according to claim 8 to 10, **characterized in that** the fixing means (130) are configured to ensure the fixing of the movable panel (110) to the nacelle (1) between the flush closed position and the open for maintenance position.

12. The air intake (3) according to any one of claims 8 to 11, **characterized in that** the movable panel (110) is movable in a radial translation.

13. A nacelle (1) for an aircraft propulsion unit, **characterized in that** it comprises an air intake (3) according to any one of the preceding claims.
